# FASCICULE DE BREVET EUROPEEN

(11) **EP 3 609 992 B1**
(45) Date de publication et mention de la délivrance du brevet: **02.07.2025**
(21) Numéro de dépôt: 17721200.8
(22) Date de dépôt: 10.04.2017
(51) Int. Cl.: C12G 3/07, C12G 1/02

(54) **PROCÉDÉ D'OBTENTION D'UNE POUDRE D'EXTRAIT AROMATIQUE A BASE DE BOIS, POUDRE D'EXTRAIT AROMATIQUE A BASE DE BOIS AINSI OBTENUE ET MÉTHODE D'ÉLEVAGE D'UN VIN UTILISANT LADITE POUDRE**
VERFAHREN ZUR GEWINNUNG EINES PULVERS AUS HOLZBASIERTEM AROMATISCHEM EXTRAKT, DADURCH ERHALTENES PULVER AUS HOLZBASIERTEM AROMATISCHEN EXTRAKT UND VERFAHREN ZUR ALTERUNG VON WEIN MITHILFE DES BESAGTEN PULVERS
METHOD FOR OBTAINING A POWDER OF WOOD-BASED AROMATIC EXTRACT, POWDER OF WOOD-BASED AROMATIC EXTRACT THUS OBTAINED AND METHOD FOR AGEING WINE USING SAID POWDER

(43) Date de publication de la demande: 19.02.2020
(73) Titulaire: Alter Ego, 33000 Bordeaux (FR)
(72) Inventeur: DUTEL, Jean-Luc, 33000 Bordeaux (FR); CARIS, Paul, 33370 Yvrac (FR)
(74) Mandataire: Fantin, Laurent
(86) Numéro de dépôt international: PCT/FR2017/050858
(87) Numéro de publication internationale: WO 2018/189428

(56) Documents cités:
- WO-A1-2016/046481
- WO-A2-2010/133543
- FR-A1- 2 396 798
- US-A- 5 102 675
- A.B. BAUTISTA-ORTN ET AL: "The use of oak chips during the ageing of a red wine in stainless steel tanks or used barrels: effect of the contact time and size of the oak chips on aroma compounds", AUSTRALIAN JOURNAL OF GRAPE AND WINE RESEARCH, vol. 14, no. 2, 1 July 2008 (2008-07-01), AU, pages 63 - 70, XP055428424, ISSN: 1322-7130, DOI: 10.1111/j.1755-0238.2008.00008.x

## Description

La présente demande se rapporte à un procédé d'obtention d'une poudre d'extrait aromatique à base de bois, à une poudre d'extrait aromatique à base de bois ainsi obtenue ainsi qu'à une méthode d'élevage d'un vin utilisant ladite poudre.

Selon une première méthode d'élevage, le vin est élevé dans des fûts en bois, notamment en bois de chêne.

Selon un mode de réalisation, un fût en bois est réalisé à partir de merrains qui sont débités dans des grumes de bois, notamment de chêne. Après un séchage naturel de plusieurs années, les merrains sont façonnés de manière à obtenir des douelles qui ont une première face conformée à la forme intérieure de la barrique et une seconde face conformée à la forme extérieure de la barrique.

Les douelles sont ensuite positionnées à l'intérieur d'un cerclage positionné à une de leurs extrémités. En suivant, les douelles sont chauffées et humidifiées pour les cintrer et mettre en place les autres cerclages du fût.

Après sa mise en forme, le fût en bois subit une phase de chauffe appelée bousinage. En fonction de l'intensité de la chauffe, certains arômes vont se développer plus que d'autres, comme des arômes de torréfaction, de vanille par exemple. L'intensité de la chauffe est ajustée en fonction des caractéristiques organoleptiques recherchées lors de l'élevage du vin.

Enfin, les fonds sont mis en place.

Lors de l'élevage du vin dans un fût en bois, le bois du fût diffuse dans le vin des composés aromatiques qui vont compléter les arômes déjà présents dans le vin. Il diffuse également des polyphénols et des tanins qui améliorent les caractéristiques organoleptiques et l'aptitude du vin à se conserver dans le temps.

Cette première méthode d'élevage en fûts de bois est coûteuse car les fûts en bois sont onéreux et doivent être renouvelés régulièrement, généralement après deux à trois vins élevés.

Selon une deuxième méthode d'élevage, le vin est élevé dans une cuve « neutre », généralement en acier inoxydable. Des copeaux de bois ayant une taille supérieure à 2 mm sont introduits dans la cuve pour macérer dans le vin pendant une durée donnée. Selon un mode d'obtention, ces copeaux en bois peuvent avoir subi une chauffe à la manière des douelles d'un fût en bois. Ainsi, à la manière d'un fût en bois, les copeaux en bois diffusent des composés aromatiques, des polyphénols et des tanins dans le vin.

Pour donner un ordre de grandeur, la quantité de copeaux introduits dans le vin est comprise entre 2 et 10 g/l et la durée de macération peut varier d'un à plusieurs mois.

Après cette phase de macération, les copeaux de bois sont retirés du vin.

Cette deuxième méthode d'élevage n'est pas pleinement satisfaisante car il subsiste un risque de laisser d'éventuels morceaux de copeaux à l'intérieur du vin à l'issue de la phase de macération ce qui impose une étape de filtration susceptible d'altérer le vin. De plus, cette deuxième méthode d'élevage est perçue comme moins qualitative par les consommateurs. Selon le document FR2396798, une substance, destinée à être utilisée dans l'élaboration de liquides alcoolisés, présente une teneur en vanilline comprise entre environ 30 et 100 mg/l. Le procédé décrit dans ce document comprend une première extraction des dérivés phénoliques et des sucres du bois à une température comprise entre 80 et 100°C ainsi qu'une deuxième extraction partielle de la lignine et de ses dérivés sous pression à une température comprise entre 130 et 150°C. Selon ce document FR2396798, l'extraction doit s'effectuer de manière à obtenir une faible extraction de la lignine et le début de sa dégradation, notamment en vanilline.

La présente invention vise à remédier aux inconvénients de l'art antérieur.

A cet effet, l'invention a pour objet un procédé d'obtention d'une poudre d'extrait aromatique à base de bois comprenant une étape de chauffe d'au moins un morceau de bois brut séché, l'étape de chauffe étant configurée pour optimiser une extraction ultérieure de vanilline, une étape d'extraction aqueuse afin d'obtenir une solution contenant des composants extraits du bois et une étape d'atomisation de ladite solution afin d'obtenir la poudre d'extrait aromatique à base de bois, les paramètres des étapes de chauffe, d'extraction et/ou d'atomisation étant ajustés pour obtenir une poudre d'extrait aromatique comportant une concentration en vanilline comprise entre 1800 et 3800 mg/kg.

Cette solution permet d'apporter au vin des composés aromatiques, des polyphénols et des tanins à la manière des méthodes d'élevage précédemment citées, à moindre coût, sans risque de laisser des résidus de copeaux de bois.

Pour obtenir la concentration en vanilline requise, le procédé d'obtention comprend les paramètres pris isolément ou combinés suivants :
- le bois brut est du chêne sessile avec un grain fin compris entre 2 et 3 mm.
- les morceaux de bois ont une granulométrie comprise entre 2 et 6 mm.
- l'étape de chauffe est réalisée à une température comprise entre 150 et 280°C.
- l'étape d'extraction est réalisée à une température comprise entre 80 et 100°C.
- l'étape d'atomisation est réalisée à une température comprise entre 140 et 190 °C.
- les paramètres de l'étape d'atomisation sont configurés pour obtenir une granulométrie inférieure ou égale à 300 µm.

L'invention a également pour objet une composition comprenant de 30 à 100 % en poids de poudre d'extrait aromatique à base de bois et de 0 à 70 % en poids d'au moins une manoprotéine de levure.

Enfin, l'invention a également pour objet une méthode d'élevage qui consiste à dissoudre entre 50 et 200 mg/l de cette composition dans le vin.

D'autres caractéristiques et avantages ressortiront de la description détaillée de l'invention qui va suivre, description donnée à titre d'exemple uniquement.

Le procédé d'obtention d'un extrait à base de bois est mis en œuvre à partir de bois brut de chêne sessile (Quercus Petrae L.) avec un grain fin compris entre 2 et 3 mm. D'autres essences et d'autres grains sont envisageables mais ce type de bois et ce type de grains présentent le meilleur potentiel d'extraction de vanilline.

Le bois brut sélectionné est soumis à une étape de séchage afin d'abaisser le taux d'humidité du bois. Selon un mode opératoire, le bois est soumis à un séchage naturel pendant une durée de 18 à 24 mois. Cette étape de séchage permet d'obtenir un taux d'humidité d'environ 15%. Selon un mode de réalisation, le bois se présente sous la forme de morceaux de bois ou de copeaux compris entre 2 et 6 mm. Cette dimension du bois va permettre de réduire la durée de certaines étapes du procédé.

En suivant, le bois est soumis à une étape de chauffe. Cette étape a pour finalité de développer les arômes souhaités.

La température de l'étape de chauffe est comprise entre 150 et 280°C. Les caractéristiques de la chauffe, notamment la température, l'intensité, la durée sont ajustées afin d'optimiser l'extraction ultérieure de vanilline.

De préférence, les étapes de sélection du bois brut et/ou de chauffe sont réalisées par lots. A l'issue de l'étape de chauffe, un échantillon représentatif est prélevé dans chaque lot et analysé afin de sélectionner pour les étapes ultérieures le ou les lots contenant des quantités minimales requises pour les composés extractibles recherchés (vanilline, gamma-octalactone, eugénol, furfural, polyphénols,...).

Après l'étape de chauffe, les morceaux de bois sont soumis à une étape d'extraction en phase aqueuse.

A titre indicatif, pour réaliser cette extraction aqueuse, une quantité de morceaux de bois 70 à 100 kg est introduite dans 600 à 800 l d'eau.

Cette extraction aqueuse est réalisée à la pression atmosphérique, à une température comprise entre 80 et 100°C. La durée de l'extraction est comprise entre 1h et 9h et de préférence entre 4 et 8 h.

Les caractéristiques de l'étape d'extraction (température, durée) sont ajustées de manière à optimiser l'extraction de vanilline.

L'étape d'extraction peut être suivie d'une étape de concentration visant à concentrer dans la phase aqueuse les composants extraits du bois. A cet effet, un concentrateur à flot tombant peut être utilisé.

Enfin, la solution aqueuse contenant les composants extraits du bois, de préférence concentrée, est soumise à une étape d'atomisation afin d'obtenir une poudre fine composée des composants extraits du bois. L'étape d'atomisation est réalisée à une température comprise entre 140 et 190°C. La poudre obtenue a une granulométrie inférieure ou égale à 300 µm.

Les différents paramètres du procédé précédemment décrit sont ajustés de sorte que les concentrations des différentes molécules présentent dans la poudre d'extrait aromatique à base de bois soient comprises :
- Pour les tanins entre 300 et 700 g/kg,
- Pour la vanilline entre 1800 et 3800 mg/kg.

Selon une autre caractéristique de l'invention, la poudre d'extrait aromatique à base de bois obtenue à partir du procédé de l'invention est mélangée avec au moins une manoprotéine de levure pour obtenir une composition finale.

De préférence, cette composition finale comprend :
- De 30 à 100 % en poids de poudre d'extrait aromatique à base de bois,
- De 0 à 70 % en poids d'au moins une manoprotéine de levure.

Cette composition finale permet de renforcer les effets bénéfiques de la poudre d'extrait aromatique à base de bois (goût, odeur) et ceux des manoprotéines (rondeur en bouche, stabilité protéique, augmentation de la sensation fruité,...).

De préférence, la composition finale comprend environ 50% en poids de poudre d'extrait aromatique à base de bois et environ 50 % en poids d'au moins une manoprotéine de levure. Pour cette composition finale, les concentrations des différentes molécules sont :
- Pour les tanins entre 150 et 350 g/kg,
- Pour la vanilline entre 900 et 1900 mg/kg.

Pour améliorer les caractéristiques organoleptiques du vin, la composition finale comprenant au moins la poudre d'extrait aromatique à base de bois est introduite et dissoute dans le vin durant la phase d'élevage, postérieure à toutes les phases de fermentation ou de macération. La quantité de la composition finale introduite et dissoute dans le vin est comprise entre 50 et 200 mg/l.

Contrairement aux copeaux, la poudre d'extrait aromatique à base de bois se dissout dans le vin à la manière des levures. Par conséquent, le procédé d'élevage du vin ne comprend aucune étape de retrait des éléments introduits dans le vin pour y diffuser des composés aromatiques, des polyphénols et des tanins. Enfin, le coût de revient de la poudre d'extrait aromatique à base de bois est beaucoup moins élevé que celui généré par l'utilisation de fût en bois.

## Revendications

1. Procédé d'obtention d'une poudre d'extrait aromatique à base de bois comprenant une étape de chauffe d'au moins un morceau de bois brut séché, l'étape de chauffe étant configurée pour optimiser une extraction ultérieure de vanilline, une étape d'extraction aqueuse afin d'obtenir une solution contenant des composants extraits du bois et une étape d'atomisation de ladite solution afin d'obtenir la poudre d'extrait aromatique à base de bois, les paramètres des étapes de chauffe, d'extraction et/ou d'atomisation étant ajustés pour obtenir une poudre d'extrait aromatique comportant une concentration en vanilline comprise entre 1800 et 3800 mg/kg.

2. Procédé d'obtention d'une poudre d'extrait aromatique à base de bois selon la revendication 1, **caractérisé en ce que** le bois brut est du chêne sessile avec un grain fin compris entre 2 et 3 mm.

3. Procédé d'obtention d'une poudre d'extrait aromatique à base de bois selon la revendication 1 ou 2, **caractérisé en ce qu'**il comprend une étape de séchage naturel pendant 18 à 24 mois.

4. Procédé d'obtention d'une poudre d'extrait aromatique à base de bois selon l'une des revendications précédentes, **caractérisé en ce que** les morceaux de bois ont une granulométrie comprise entre 2 et 6 mm.

5. Procédé d'obtention d'une poudre d'extrait aromatique à base de bois selon l'une des revendications précédentes, **caractérisé en ce que** l'étape de chauffe est réalisée à une température comprise entre 150 et 280°C.

6. Procédé d'obtention d'une poudre d'extrait aromatique à base de bois selon l'une des revendications précédentes, **caractérisé en ce que** l'étape d'extraction est réalisée à une température comprise entre 80 et 100°C.

7. Procédé d'obtention d'une poudre d'extrait aromatique à base de bois selon l'une des revendications précédentes, **caractérisé en ce que** l'étape d'atomisation est réalisée à une température comprise entre 140 et 190°C.

8. Procédé d'obtention d'une poudre d'extrait aromatique à base de bois selon l'une des revendications précédentes, **caractérisé en ce que** les paramètres de l'étape d'atomisation sont configurés pour obtenir une granulométrie inférieure ou égale à 300 µm.

9. Poudre d'extrait aromatique à base de bois obtenue à partir du procédé selon l'une des revendications précédentes, **caractérisée en ce qu'**elle comprend une concentration en vanilline comprise entre 1800 et 3800 mg/kg.

10. Poudre d'extrait aromatique à base de bois selon la revendication 9, **caractérisée en ce qu'**elle comprend une concentration en tanin comprise entre 300 et 700 g/kg.

11. Composition comprenant de 30 à 100 % en poids de poudre d'extrait aromatique à base de bois selon la revendication 9 ou 10 et de 0 à 70 % en poids d'au moins une manoprotéine de levure.

12. Composition selon la revendication précédente, **caractérisée en ce qu'**elle comprend environ 50 % en poids de poudre d'extrait aromatique à base de bois et environ 50 % en poids d'au moins une manoprotéine de levure.

13. Méthode d'élevage d'un vin comprenant une étape de dissolution dans le vin d'une composition selon l'une des revendications 11 à 12.

14. Méthode d'élevage d'un vin selon la revendication précédente, **caractérisée en ce qu'**une quantité de composition comprise entre 50 et 200 mg/l est introduite dans le vin.

## Patentansprüche

1. Verfahren zur Gewinnung eines aromatischen Extraktpulvers auf Holzbasis, mit einem Schritt des Erhitzens wenigstens eines Stücks getrockneten Rohholzes, wobei der Erhitzungsschritt so eingerichtet ist, dass er die anschließende Extraktion von Vanillin optimiert, mit einem Schritt der wässrigen Extraktion, um eine Lösung zu erhalten, die aus dem Holz extrahierte Bestandteile enthält, und mit einem Schritt der Zerstäubung der Lösung, um das aromatische Extraktpulver auf Holzbasis zu erhalten, wobei die Parameter der Schritte des Erhitzens, der Extraktion und/oder der Zerstäubung so eingestellt werden, dass ein aromatisches Extraktpulver mit einer Vanillinkonzentration zwischen 1800 und 3800 mg/kg erhalten wird.

2. Verfahren zur Herstellung eines aromatischen Extraktpulvers auf Holzbasis nach Anspruch 1, **dadurch gekennzeichnet, dass** das Rohholz Traubeneiche mit einer feinen Maserung zwischen 2 und 3 mm ist.

3. Verfahren zur Herstellung eines aromatischen Extraktpulvers auf Holzbasis nach Anspruch 1 oder 2, **dadurch gekennzeichnet, dass** es einen Schritt des natürlichen Trocknens für 18 bis 24 Monate aufweist.

4. Verfahren zur Herstellung eines aromatischen Extraktpulvers auf Holzbasis nach einem der vorhergehenden Ansprüche, **dadurch gekennzeichnet, dass** die Holzstücke eine Korngröße zwischen 2 und 6 mm haben.

5. Verfahren zur Herstellung eines aromatischen Extraktpulvers auf Holzbasis nach einem der vorhergehenden Ansprüche, **dadurch gekennzeichnet, dass** der Erhitzungsschritt bei einer Temperatur zwischen 150 und 280 °C durchgeführt wird.

6. Verfahren zur Gewinnung eines aromatischen Extraktpulvers auf Holzbasis nach einem der vorhergehenden Ansprüche, **dadurch gekennzeichnet, dass** der Extraktionsschritt bei einer Temperatur zwischen 80 und 100 °C durchgeführt wird.

7. Verfahren zur Gewinnung eines aromatischen Extraktpulvers auf Holzbasis nach einem der vorhergehenden Ansprüche, **dadurch gekennzeichnet, dass** der Extraktionsschritt bei einer Temperatur zwischen 140 und 190 °C durchgeführt wird.

8. Verfahren zur Herstellung eines aromatischen Extraktpulvers auf Holzbasis nach einem der vorhergehenden Ansprüche, **dadurch gekennzeichnet, dass** die Parameter des Zerstäubungsschritts so eingerichtet sind, dass eine Teilchengröße von 300 µm oder weniger erhalten wird.

9. Aromatisches Extraktpulver auf Holzbasis, das aus dem Verfahren nach einem der vorhergehenden Ansprüche gewonnen wird, **dadurch gekennzeichnet, dass** es eine Vanillinkonzentration zwischen 1800 und 3800 mg/kg aufweist.

10. Aromatisches Extraktpulver auf Holzbasis nach Anspruch 9, **dadurch gekennzeichnet, dass** es eine Tanninkonzentration zwischen 300 und 700 g/kg aufweist.

11. Zusammensetzung, die 30 bis 100 Gew.-% aromatisches Extraktpulver auf Holzbasis nach Anspruch 9 oder 10 und 0 bis 70 Gew.-% wenigstens eines Hefe-Manoproteins enthält.

12. Zusammensetzung nach dem vorhergehenden Anspruch, **dadurch gekennzeichnet, dass** sie etwa 50 Gew.-% aromatisches Extraktpulver auf Holzbasis und etwa 50 Gew.-% wenigstens eines Hefe-Manoproteins enthält.

13. Verfahren zum Ausbau eines Weins, das einen Schritt des Auflösens einer Zusammensetzung nach einem der Ansprüche 11 bis 12 in dem Wein aufweist.

14. Verfahren zum Ausbau eines Weins nach dem vorhergehenden Anspruch, **dadurch gekennzeichnet, dass** eine Menge der Zusammensetzung zwischen 50 und 200 mg/l in den Wein eingebracht wird.

## Claims

1. Process for obtaining a wood-based aromatic extract powder, comprising a step of heating at least one piece of dried raw wood, the step of heating being configured to optimize a subsequent extraction of vanillin, a step of aqueous extraction in order to obtain a solution containing components extracted from the wood and a step of atomizing said solution in order to obtain the wood-based aromatic extract powder, the parameters of the steps of heating, of extraction and/or of atomization being adjusted in order to obtain an aromatic extract powder comprising a vanillin concentration of between 1800 and 3800 mg/kg.

2. Process for obtaining a wood-based aromatic extract powder according to Claim 1, **characterized in that** the raw wood is sessile oak with a fine grain of between 2 and 3 mm.

3. Process for obtaining a wood-based aromatic extract powder according to Claim 1 or 2, **characterized in that** it comprises a step of natural drying for 18 to 24 months.

4. Process for obtaining a wood-based aromatic extract powder according to one of the preceding claims, **characterized in that** the pieces of wood have a particle size of between 2 and 6 mm.

5. Process for obtaining a wood-based aromatic extract powder according to one of the preceding claims, **characterized in that** the step of heating is carried out at a temperature of between 150 and 280°C.

6. Process for obtaining a wood-based aromatic extract powder according to one of the preceding claims, **characterized in that** the step of extraction is carried out at a temperature of between 80 and 100°C.

7. Process for obtaining a wood-based aromatic extract powder according to one of the preceding claims, **characterized in that** the step of atomization is carried out at a temperature of between 140 and 190°C.

8. Process for obtaining a wood-based aromatic extract powder according to one of the preceding claims, **characterized in that** the parameters of the step of atomization are configured in order to obtain a particle size of less than or equal to 300 µm.

9. Wood-based aromatic extract powder obtained using the process according to one of the preceding claims, **characterized in that** it comprises a vanillin concentration of between 1800 and 3800 mg/kg.

10. Wood-based aromatic extract powder according to Claim 9, **characterized in that** it comprises a tannin concentration of between 300 and 700 g/kg.

11. Composition comprising from 30% to 100% by weight of wood-based aromatic extract powder according to Claim 9 or 10 and from 0% to 70% by weight of at least one yeast mannoprotein.

12. Composition according to the preceding claim, **characterized in that** it comprises approximately 50% by weight of wood-based aromatic extract powder and approximately 50% by weight of at least one yeast mannoprotein.

13. Method for maturing a wine comprising a step of dissolving a composition according to one of Claims 11 and 12 in the wine.

14. Method for maturing a wine according to the preceding claim, **characterized in that** an amount of composition of between 50 and 200 mg/l is introduced into the wine.
